# EUROPEAN PATENT APPLICATION

(11) **EP 2 086 095 A1**
(43) Date of publication of application: **05.08.2009**
(21) Application number: 08166711.5
(22) Date of filing: 15.10.2008
(51) Int. Cl.: H02M 1/42

(54) **Phase shift and synchronization control circuit for interleaved PFC controller**

(71) Applicant: China Electronics Weihua Co., Ltd., HiaDian District Beijing (CN)
(72) Inventor: Wang, Yingfeng, Hai Dian District Beijing (CN); Zhang, Yuchun, Hai Dian District Beijing (CN); Du, Jinlong, Hai Dian District Beijing (CN)
(74) Representative: Quinterno, Giuseppe

(57) **Abstract**

The present invention relates to a phase shift and synchronization control circuit (102) for interleaved PFC (Power Factor Correction) controllers. In order to control two separate PFC controllers (101; 102) working out of phase (at nearly 180 degrees) and with an appropriate duty-cycle, the circuit (103) comprises a first input terminal and a second input terminal, a first inverter (NOT1) and a second inverter (NOT2), a first data register (DFF1) and a second data register (DFF2), a first divider (DIV1) and a second divider (DIV2), an exclusive-OR gate (XOR), four NAND gates (AND1-AND4) and a first integrating network (D1, R1, C1) and a second integrating network (D2, R2, C2). The invention allows to correct the waveform of the line current to a sinusoid that is in phase with the line input voltage.

## Description

### FIELD OF THE INVENTION

The present invention generally relates to the field of HPS (High Pressure Sodium) electronic ballasts. More particularly, the present invention relates to an interleaved PFC (Power Factor Correction) controller, that is a synchronization and phase shift module.

### BACKGROUND OF THE INVENTION

Recently, the PFC controller used in the electronic ballast for HPS is intended to correct the wave form of the line current to a sinusoid that is in phase with the line input voltage.

In the PFC circuit topology, now usually the boost converter mainly delivers a regulated DC voltage (with a little ripple) to a main inverter. The Power Factor Correction circuitry comprises many electronic components, that is to say, a high voltage MOSFET as a switch, a PFC inductor, a soft recovery diode (also as a switch) and a HV (High Voltage) bulk electrolytic capacitor, and associated electronic components and control circuit (IC). The main ballast converter is a typical HB (Half Bridge) converter and the HB drives two resonant networks, one for ignition (higher frequency) and the other for normal operation (lower frequency).

The Half Bridge topology is commonly used in many ballast circuitries. It can drive the load from the small power of a 40W fluorescent lamp to the large power of HPS which is greater than 1000W.

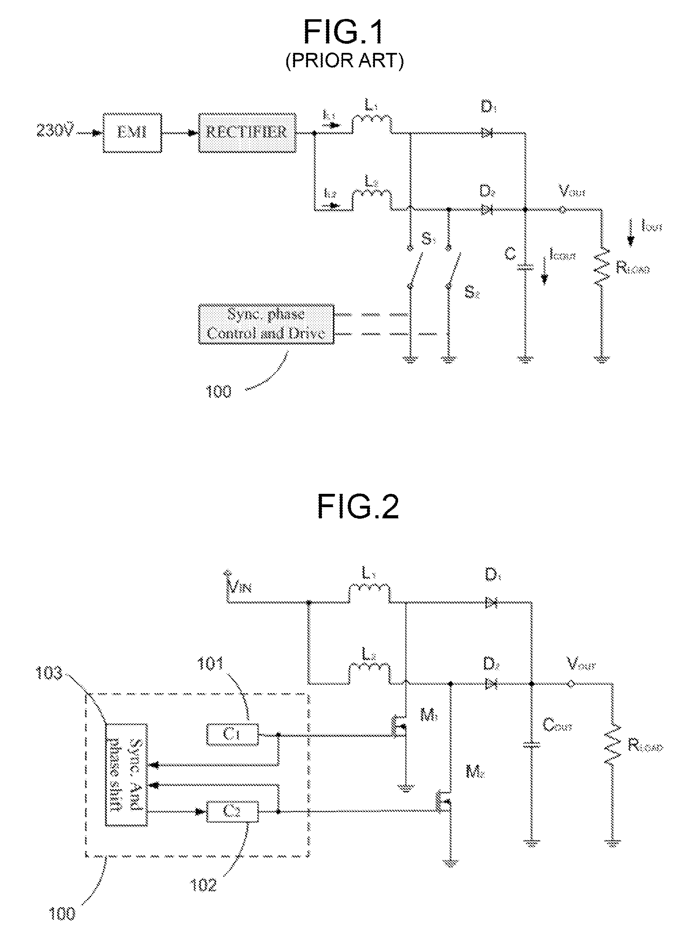

The use of two phase interleaved power factor correction boost converters has many benefits more than a conventional single stage PFC, as illustrated in the block diagram of Fig. 1.

The two phase interleaved boost converter simply corresponds to two boost converters in parallel operating 180° out of phase. The input current [IL1 and IL2] is the sum of the two inductor currents IL1 and IL2. Interleaving PFC reduces the output capacitor ripple current (I_{COUT}) as a function of duty cycle.

As the duty cycle approaches 0 percent, 50 percent and 100 percent, the sum of the currents in the two diodes approaches dc. At these points the output capacitor filters the inductor ripple current.

The prior art mentioned above is adapted from "An Interleaving PFC Pre-Regulator for High-Power Converters" by Micheal O'Loughlin, Texas Instruments. The article describes the interleaving PFC converter in detail.

An example of an interleaved PFC circuit is described in US patent No. 6091233, entitled "Interleaved Zero Current Switching in a Power Factor Converter Boost Converter". Another example of an interleaved PFC circuit is described in PCT (Patent Cooperation Treaty) International Publication WO 200808509 entitled "Interleaved Power Factor Corrector Boost Converter"

### SUMMARY OF THE INVENTION

The technical problem this invention aims to solve is to provide a synchronization and phase shift controller for interleaved PFC, to correct the wave form of the line current to a sinusoidal that is in phase with the line input voltage.

In order to address these technical problems, this invention provides a synchronization and phase shift controller, comprising a first input terminal and a second input terminal coupled to PFC controllers, and also comprising:
a first Not gate, which is coupled to the first input terminal, so as to receive a first input signal;
a second Not gate, which is coupled to the second input terminal, so as to receive a second input signal;
a first divider coupled to the output terminal of the first Not gate;
a second divider coupled to the output terminal of the second Not gate;
a first data register, whose clock input terminal is coupled to the output terminal of the first Not gate;
a second data register, whose clock input terminal is coupled to the output terminal of the second Not gate;
an XOR gate, which is coupled to the output terminals of the said two dividers, so as to perform an exclusive-OR calculation; the output of the XOR gate being coupled to the data input terminals of the first data register and the second data register, respectively;
a first NAND gate, whose input terminals are coupled to the output terminal of the XOR gate and the output terminal of the second data register respectively;
a second NAND gate, whose input terminals are coupled to the output terminal of the first NAND gate and the output terminal of the first data register respectively;
a first integrating network, comprising a first diode, a first resistor and a first capacitor, where the input terminal of the first integrating network is coupled to the first input terminal, and the first integrating network serves as an integrator to the first input signal;
a third NAND gate, having one of its input terminals coupled to a common terminal of the first diode, the first resistor and the first capacitor, and the other input terminal coupled to the output terminal of the second NAND gate ;
a second integrating network, comprising a second diode, the second resistor and a second capacitor, where the input terminal of the second integrating network is coupled to the second input terminal, and the second integrating network serves as an integrator to the second input signal;
a fourth NAND gate, having one of its input terminals coupled to a common terminal of the second diode, the second resistor and the second capacitor, and the other input terminal coupled to the output terminal of the third NAND gate.

The output signal of the first Not gate is out of phase with the first input signal; the output signal of the second Not gate is out of phase with the second input signal.

The input signal of the first divider and the input signal of the second divider are divided by 2 respectively, and both have 50% duty cycle at the output signals.

The first data register and the second data register are both D-type Flip-Flops.

This invention can correct the wave form of the line current to a sinusoidal that is in phase with the line input voltage.

### BRIEF DESCRIPTION OF THE DRAWINGS

Fig. 1 illustrates the block diagram of the prior art.
Fig. 2 illustrates more details of an interleaved PFC controller.
Fig. 3 illustrates the relationship of a synchronization and phase shift module to a main PFC control IC (TDA4863-2).
Fig. 4 shows a detailed diagram of the invention.
Fig. 5-1 shows the waveform of two input signals **IN_A** and **IN_B,** phase difference 20 degrees, duty cycle 20%.
Fig. 5-2 shows the waveform of two input signals **IN_A** and **IN_B,** phase difference 90 degrees, duty cycle 20%.
Fig. 5-3 shows the waveform of two input signals **IN_A** and **IN_B,** phase difference 180 degrees, duty cycle 20%.
Fig. 6 shows the waveform of signals L and M in Fig. 4 in normal operation.

### DETAILED DESCRIPTION OF A PREFERRED EMBODIMENT

Further details of the technology scheme of this invention are given below by reference to the figures and the embodiments shown therein.

Fig. 2 illustrates the interleaved PFC controller and synchronization and phase shift module **100** of Fig.1

The first PFC controller **101** and the second PFC controller **102** in the control module are for example both TDA4863-2 made by Infineon ^{™} : the IC for High Power Factor and Low THD Power Factor Controller. The main features thereof are the ability to control a boost converter as an active harmonic filter for low THD (Total Harmonic Distortion) and Zero current detector, for a discontinuous operation mode and a critical conduction mode.

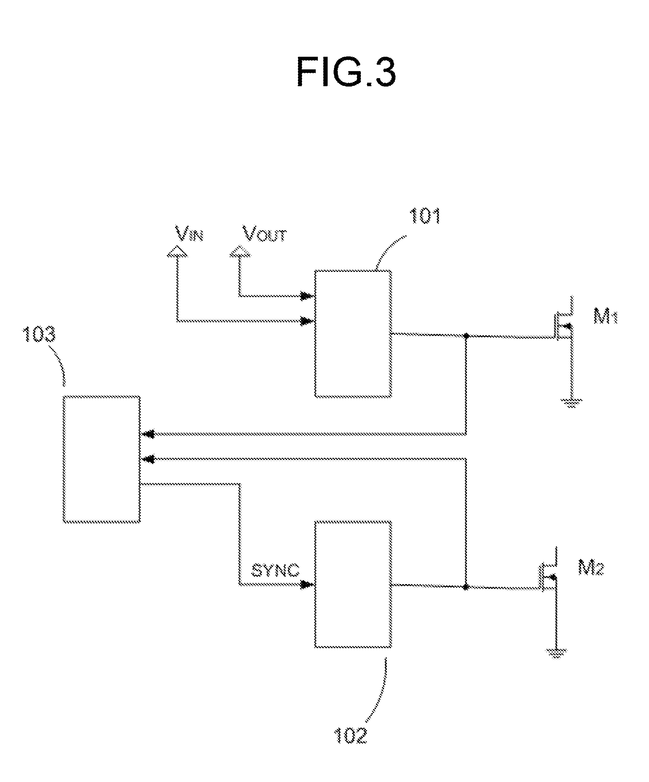

The interleaved PFC mainly comprises two separated single stage converters that are synchronized by a synchronization and phase shift module **103,** which controls the first PFC controller **101** and the second PFC controller **102's** timing, and working out of phase. As illustrated in Fig 3, phase shift module **103** receives the two PFC controller's drive signals from the first PFC controller **101** and the second PFC controller **102,** it compares the two PFC's output and gives out a synchronization signal to the second PFC controller **102;** the first PFC controller **101** and the second PFC controller **102** work out of phase nearly 180° with respect to each other. The Pulse Width Modulation and Pulse Frequency Modulation are determined by the first PFC controller **101** according to input voltage, output voltage and load condition.

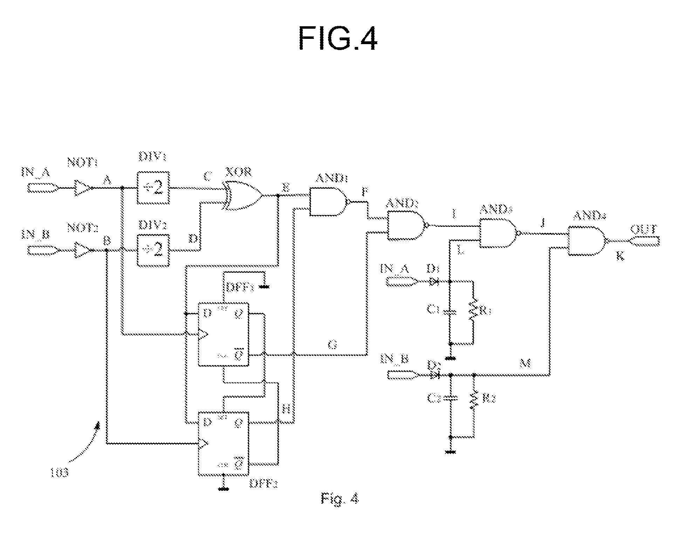

Fig.4 shows a detail diagram of the invention, that is to say the synchronization and phase shift module 103 for an interleaved PFC converter. The circuit comprises: a first input terminal and a second input terminal, a first inverter and a second inverter, a first data register and a second data register, a first divider and a second divider, an XOR gate, four NAND gates and a unidirectional integrator.

The first input signal **IN_A** and the second input signal **IN_B** are from the first PFC controller **101** and the second PFC controller **102,** respectively. The working condition of the second PFC controller **102** is controlled by the synchronization and phase shift module **103,** and it also influences the working of the first PFC controller **101** by means of the synchronization and phase shift module **103,** as can be seen from FIG. 2.

The first input signal **IN_A** and the second input signal **IN_B** are inverted by the first Not gate **NOT1** and the second Not gate **NOT2** respectively. As illustrated in Fig 4, the output terminal of the first Not gate **NOT1** is coupled to the input terminal of the first divider **DIV1,** and the output terminal of the second Not gate **NOT2** is coupled to the input terminal of the second divider **DIV2.** The output signal C of the first divider, and the output signal D of the second divider are the 1/2 frequency of the output signal A of the first Not gate and the output signal B of the second Not gate, respectively, and both have a 50% duty cycle. The output terminal of the first divider **DIV1** and the output terminal of the second divider **DIV2** are both coupled to the input terminals of the XOR gate, which performs exclusive OR calculation to the output signal C of the first divider and the output signal D of the second divider, as can be seen from Fig. 4.

The output signal of the first inverter **NOT1** is **A,** and the output signal of the second inverter **NOT2** is **B; A** also is the input signal of the first divider **DIV1** and the clock input of the first data register **DFF1.** B also is the input signal of the second divider **DIV2** and the clock input of the second data register **DFF2** in Fig. 4. The output signals **A** and **B** are out of phase with respect to the first input signal **IN_A** and the second input signal **IN_B,** respectively.

The two D-type Flip-Flops **DFF1** and **DFF2,** as data register and output NAND gate controller, are mainly for the output signals phase shift. The data inputs of the first data register **DFF1** and the second data register **DFF2** at the terminal **D** are both connected to the output terminal E of the XOR gate. The clock input of the first data register **DFF1** is from the output terminal of the first inverter **NOT1,** and the clock input of the second data register **DFF2** is from the output terminal of the second inverter **NOT2,** respectively.

The function of the first data register **DFF1** and the second data register **DFF2** is to block signal in accordance with the output signal A of the first Not gate and the output signal B of the second Not gate , as well as the output signal E from the XOR gate. The output signal E from the XOR gate is a data input of the first data register **DFF1** and the second data register **DFF2.** The output signal A of the first Not gate and the output signal B of the second Not gate are the clock signals for the first data register **DFF1** and the second data register **DFF2,** respectively.

A first integrating network comprises a first diode **D1,** a first resistor **R1** and a first capacitor **C1** and receives the first input signal **IN_A.** A second integrating network comprises a second diode **D2,** a second resistor **R2** and a second capacitor **C2** and receives the second input signal **IN_B.**

As illustrated in Fig. 4, the first input signal **IN_A** is also connected to the first integrating network **D1, R1, C1** and the second input signal **IN_B** is also coupled to the second integrating network **D2, R2, C2.** The networks form integrating circuits and have time constants larger than the period of the input signals. The output signal L of the first integrating network is a block signal to the third NAND gate **AND3,**and the output signal M of the second network is a block signal to the forth NAND gate **AND4.**

The output signal L of the first integrating network and the output signal M of the second network are DC voltage signal (with a little ripple), to control the third NAND gate **AND3,** and the fourth NAND gate **AND4,** respectively.

One input terminal of the first NAND gate **AND1** is coupled to the output terminal E of the XOR gate, and the other input terminal of the first NAND gate **AND1** is coupled to the Q̅ terminal of the second data register **DFF2,** as can be seen from Fig.4.

One input terminal of the second NAND gate **AND2** is coupled to the output terminal of the first NAND gate **AND1,** and the other input terminal of the second NAND gate **AND2** is coupled to the Q̅ terminal of the first data register **DFF1,** as can be seen from Fig.4.

One of the input terminals of the third NAND gate AND3 is coupled to the common terminal of the first diode , the first resistor and the first capacitor, and the other input terminal of the third NAND gate **AND3** is coupled to the output terminal of the second NAND gate **AND2.**

One of the input terminals of the fourth NAND gate **AND4** is coupled to the common terminal of the second diode , the second resistor and the second capacitor, and the other input terminal of the fourth NAND gate **AND4** is coupled to the output terminal of the third NAND gate **AND3** ,and the output signal of the third NAND gate **AND3** is J, as can be seen from Fig. 4.

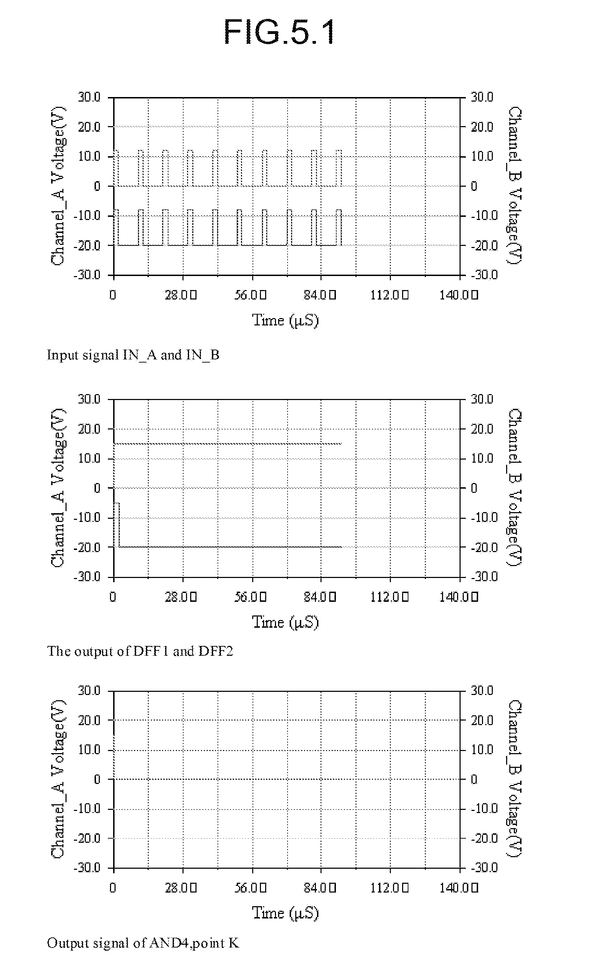

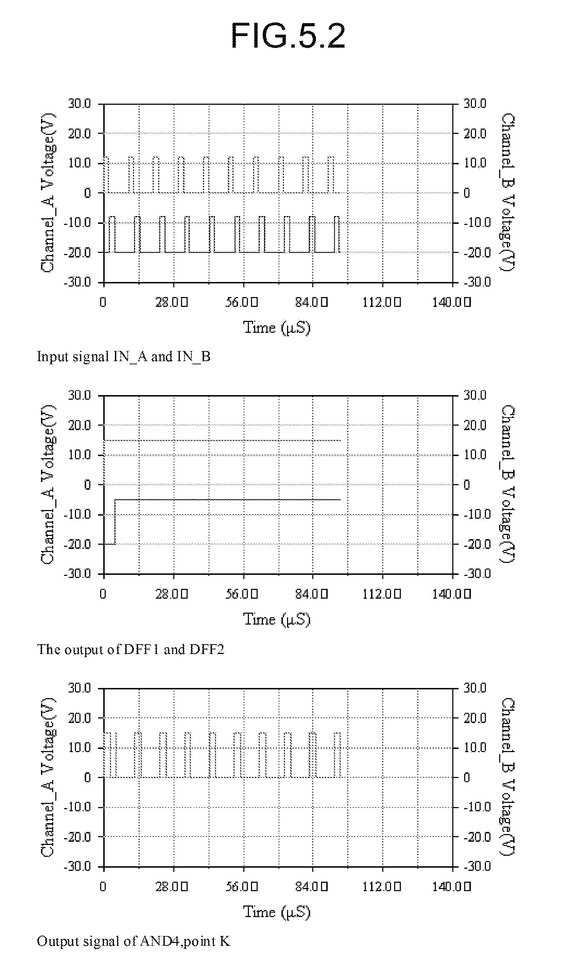

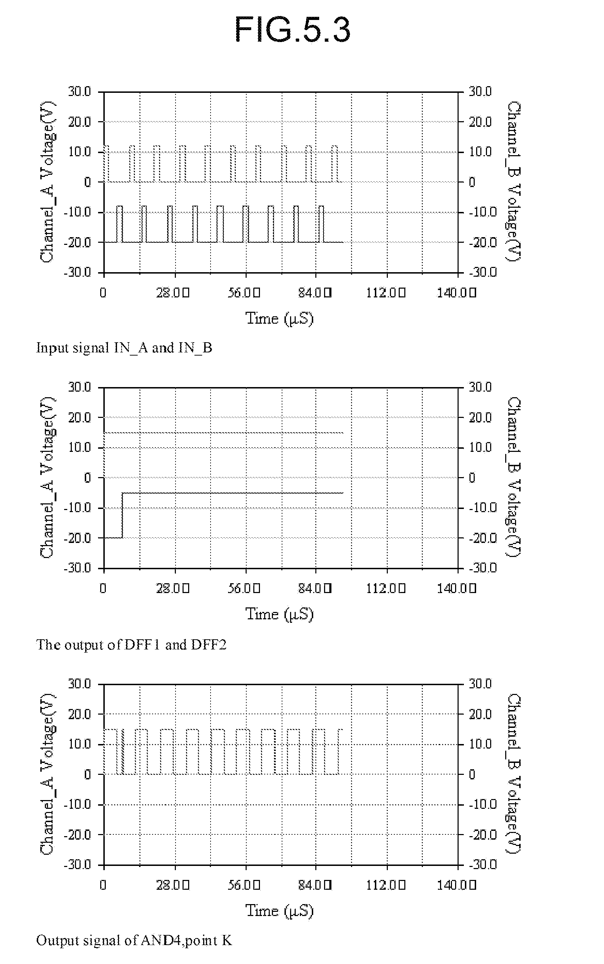

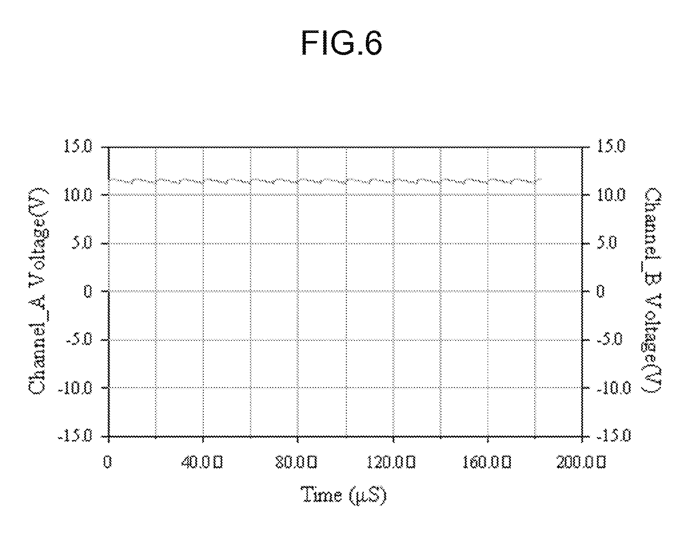

The output signal G from the first data register and the output signal H from the second data register are constant 0 level and 1 level, respectively, when normally operating (see Fig. 6), and the output K of the fourth NAND gate is a narrow pulse to turn off the power MOSFET **M2** through the second PFC controller **102,** see Fig. 5. In Fig. 5, DC means Duty Cycle.

The synchronization signal **K** is connected to the pin P7 of TDA4863-2 (the second PFC controller 102) in Fig 1, because the Synch pin is the voltage sense terminal, so the on time and the off time is depending on the zero current detection and the integration constant of the voltage sense terminal, and the phase difference is a little bit different between the theoretical calculation and practical circuits testing.

The phase difference and duty cycle between the first PFC controller **101** and the second PFC controller **102** in Fig 1 mainly depend on the input voltage and the output current. The running frequency is widely changed in its normal operating condition at line voltage 165∼265 volts.

Fig. 6 shows the waveform at the first network output **L** and the second network output **M** when in normal operation (the figure shows the waveform at point **L** only, the waveform at point **M** being the same as that of point **L**).

It must be pointed out that the above embodiment is only the preferred mode to carry out the invention, rather than a further limitation of the technology scheme of this invention. The corresponding equivalent replacement of or improvements of the technical characteristics of this invention, made by any technical person familiar with this field, still fall within the scope of protection of the present invention.

## Claims

1. A synchronization and phase shift controller (103), comprising a first input terminal and a second input terminal coupled to respective Power Factor Correction controllers (101; 102), and also comprising:
a first Not gate (NOT1), which is coupled to the first input terminal, so as to receive the first input signal (IN_A);
a second Not gate (NOT2), which is coupled to the second input terminal, so as to receive the second input signal (IN_B);
a first divider (DIV1) coupled to the output terminal of the first Not gate (NOT1);
a second divider (DIV2) coupled to the output terminal of the second Not gate (NOT2);
a first data register (DFF1), whose clock input terminal is coupled to the output terminal of the first Not gate (NOT1);
a second data register (DFF2), whose clock input terminal is coupled to the output terminal of the second Not gate (NOT2);
an exclusive-OR gate (XOR), which is coupled to the output terminals of the said two dividers (DIV1, DIV2), so as to perform an exclusive OR calculation; the output of the exclusive-OR gate (XOR) being coupled to the data input terminals of the first data register (DFF1) and the second data register (DFF2), respectively;
a first NAND gate (AND1), whose input terminals are coupled to the output terminal of the exclusive-OR gate (XOR) and the output terminal of the second data register (DFF2), respectively;
a second NAND gate (AND2), whose input terminals are coupled to the output terminal of the first NAND gate (AND1) and the output terminal of the first data register (DFF1), respectively;
a first integrating network (D1, R1, C1), comprising a first diode (D1), a first resistor (R1) and a first capacitor (C1), where the input terminal of the first integrating network (D1, R1, C1) is coupled to the first input terminal, and the first integrating network (D1, R1, C1) serves as an integrator to the first input signal (IN_A);
a third NAND gate (AND3), having one of its input terminals coupled to a common terminal of the first diode (D1), the first resistor (R1) and the first capacitor (C1), and the other input terminal coupled to the output terminal of the second NAND gate (AND2);
a second integrating network (D2, R2, C2), comprising a second diode (D2), a second resistor (R2) and a second capacitor (C2), where the input terminal of the second integrating network (D2, R2, C2) is coupled to the second input terminal, and the second integrating network (D2, R2, C2) serves as an integrator to the second input signal (IN_B);
a fourth NAND gate (AND4), having one of its input terminals coupled to a common terminal of the second diode (D2), the second resistor (R2) and the second capacitor (C2), and the other input terminal coupled to the output terminal of the third NAND gate (AND3).

2. A synchronization and phase shift controller according to claim 1, wherein the output signal (A) of the first Not gate (NOT1) is out of phase with the first input signal (IN_A); the output signal (B) of the second Not gate (NOT2) being out of phase with the second input signal (IN_B).

3. A synchronization and phase shift controller according to claim 1, wherein the input signal (A) of the first divider (DIV1) and the input signal (B) of the second divider (DIV2) are divided by 2 respectively, and both have a 50% duty-cycle at the output signals.

4. A synchronization and phase shift controller according to claim 1, wherein the first data register (DFF1) and the second data register (DFF2) are both D-type Flip-Flops.
